# EUROPÄISCHE PATENTSCHRIFT

(11) **EP 1 940 004 B1**
(45) Veröffentlichungstag und Bekanntmachung des Hinweises auf die Patenterteilung: **12.02.2020**
(21) Anmeldenummer: 07024927.1
(22) Anmeldetag: 21.12.2007
(51) Int. Cl.: H02K 1/16, H02K 9/22, H02K 41/02

(54) **Blechpaket eines Linearmotors**
Linear motor lamination
Paquet de tôles d'un moteur linéaire

(30) Priorität: 29.12.2006 DE 102006062526
(43) Veröffentlichungstag der Anmeldung: 02.07.2008
(73) Patentinhaber: ROBERT BOSCH GMBH, 70469 Stuttgart (DE)
(72) Erfinder: Lisjak, Rado, 1000 Ljubljana (SI); Gröning, Ingolf, 97816 Lohr am Main (DE); Kaehler, Christian, 52146 Würselen (DE)
(74) Vertreter: Thürer, Andreas

(56) Entgegenhaltungen:
- DE-A1- 2 144 441
- DE-A1- 4 107 399
- DE-A1- 10 355 267
- DE-A1-102004 021 740
- DE-A1-102005 022 548
- DE-A1-102006 022 281
- US-A- 3 414 749
- US-A- 5 051 634
- US-A1- 2004 095 035
- US-A1- 2006 125 338

## Beschreibung

Die Erfindung betrifft ein Motorblech, ein Blechpaket und ein Primärteil zur Herstellung eines Linearmotors sowie einen Linearmotor als solchen sowie ein Herstellverfahren.

Aus dem Stand der Technik sind Linearmotoren sowie Blechpakete oder Bleche zur Herstellung eines solchen Linearmotors bekannt. Das deutsche Gebrauchsmuster DE 297 23 597 zeigt den Stator eines Linearmotors in Schnittdarstellung. Deutlich erkennbar ist das kammförmige Profil, welches mittels an einem Grundelement angeordneten Zähnen zur Aufnahme von Wicklungen realisiert ist. Die Wicklungen sind ebenfalls dargestellt Der hier gezeigte Querschnitt entspricht auch gleichzeitig dem Profil eines Motorbleches, aus dem dieser Stator hergestellt wurde. Diese Anordnung hat den Nachteil, dass in den Wicklungen auftretende Stromwärmeverluste nicht optimal in das in der Regel gekühlte Blechpaket abgeführt werden.

Dokument US 2006 012 53 38 A1 offenbart ein Motorblech gemäß dem Oberbegriff des Anspruchs 1.

Die Aufgabe der Erfindung besteht darin, die Kraftdichte eines Linearmotors bei unveränderter Wicklungstemperatur und Isolationsklasse zu erhöhen.

Die Erfindung erreicht dies, indem ein Motorblech zur Herstellung eines Blechpaketes für ein Linearmotorprimärteil nach Anspruch 1 verwendet wird.

Die Erfindung wird durch die Ansprüche definiert.

Die Erfindung verwendet demnach im Gegensatz zum Stand der Technik einen Hilfsvorsprung, um die Übergangsfläche zwischen dem aus dem Motorblech gebildeten Blechpaket und eines am Blechpaket angeordneten Wickelkörpers zur Wärmeableitung zu erhöhen. Folglich kann trotz höherer Motorleistung die Wicklungstemperatur niedriger gehalten werden, als ohne Verwendung der Hilfsvorsprünge. Dies hat den zusätzlichen Effekt, dass die Kraftwelligkeit und die Rastkraft durch die Verwendung von Hilfsvorsprüngen reduziert werden kann, da die Streupfade optimiert werden. Die Hilfsvorsprünge entstehen beim ' Ausstanzen der Bleche, indem ein Blechstanzwerkzeug oder mehrere Blechstanzwerkzeuge mit einer Schneidkante, welche korrespondierend zum Profil des Motorbleches ausgebildet ist, verwendet werden.

Bevorzugt wird die Höhe der Hilfsvorsprünge so gewählt ist, dass im Blechpaket vorhandene Streuflüsse erfasst werden, um Streupfade zu optimieren und die Kraftwelligkeit und Rastkraft zu reduzieren.

Besonders bevorzugt sind die Hilfsvorsprünge und/oder die Hauptvorsprünge konisch ausgebildet. Hierdurch wird bei einer extern gewickelten Wicklung mit rechteckigem Wicklungsschnitt der Anpressdruck zwischen Wicklungspaket und Blech erhöht und der Wärmeübergang verbessert.

Ganz besonders bevorzugt wird das Verhältnis zwischen der Breite der Hauptvorsprünge und der Breite des Zwischenraumes zwischen den Hauptvorsprüngen so gewählt, dass eine möglichst geringe Kraftwelligkeit und Rastkraft im späteren Betrieb auftritt. Die Herstellung von Präzisionsmaschinen wird damit ermöglicht.

Vorteilhafterweise umfasst das Halteelement Aussparungen zur Realisierung von Kühlkanälen im Blechpaket, so dass je nach geforderter Leistungsfähigkeit jederzeit eine Kühlung vorgesehen werden kann.

Erfindungsgemäß umfasst das Halteelement zusätzlich zu den oben genannten Aussparungen weitere, vorteilhafterweise schwalbenschwanzförmige Aussparungen zur Realisierung von Haltenuten im Blechpaket Hierdurch können Befestigungsmittel am Blechpaket mit Gewindebohrungen angeordnet werden, ohne dass derartige Bohrungen im Blechpaket selbst vorgenommen werden müssen, was die Herstellkosten verringert.

Bevorzugt ist das Motorblech einteilig hergestellt, was die Teileanzahl reduziert und den Montageaufwand verringert.

Vorteilhafterweise umfassen die Hauptvorsprünge und/oder die Hilfsvorsprünge an ihren seitlichen Wandungen in unmittelbarer Nähe zu den dem Sekundärteil zugewandten Stirnflächen Aussparungen zur Realisierung von Führungsnuten im Blechpaket. Dies ermöglicht die spätere Montage von Zusatzteilen an den Vorsprüngen.

Ein Blechpaket, welches erfindungsgemäße Motorbleche umfasst, wobei die Bleche miteinander verbunden sind, so dass die Hauptvorsprünge Hauptzähne zur Aufnahme von Wicklungen bilden und die mittig zwischen den Hauptvorsprüngen angeordneten Hilfsvorsprünge Hilfszähne bilden, weist alle bereits genannten Vorteile auf. Vorzugsweise ist die Verbindung zwischen den Blechen mechanisch oder stoffschlüssig realisiert, beispielsweise mittels Vernieten, Verschrauben, Verkleben, Stanzpaketieren oder Verschweißen, zum Beispiel Laserschweißen. Es handelt sich hierbei um sehr kosteneffiziente Verbindungsmethoden.

Vorteilhafterweise ist das Primärteil eines Linearmotors mit einem Grundkörper, bestehend aus einem erfindungsgemäßen Blechpaket, realisiert. Unter Primärteil wird die ortsfeste Komponente eines Linearmotors verstanden, welche die Wicklungen zur Erzeugung eines magnetischen Wanderfeldes umfasst Demgemäß handelt es sich bei dem ebenfalls von dem Linearmotor umfassten Sekundärteil um die bewegliche Komponente, welche in der Regel Permanentmagnete umfasst, deren magnetisches Feld mit dem vom Primärteil erzeugten Wanderfeld interagiert. Ein erfindungsgemäßer Linearmotor ist bezüglich seiner Kraftdichte und Wicklungstemperatur optimal konfigurierbar. Bevorzugt sind an den Hilfszähnen und/oder den Hauptzähnen Abdeckmittel angeordnet, welche die Wicklungen in ihrer Position fixieren. Das Primärteil umfasst weiter bevorzugt Haltenuten, in denen Nutsteine angeordnet sind. Die Nutsteine erleichtern die Befestigung des Primärteils an einem Primärteilträger (Montageplatte), indem diese in der Regel aus Metall bestehenden Nutsteine Gewindebohrungen umfassen. Zur weiteren Verbesserung der Wärmeabfuhr umfasst das Primärteil vorzugsweise Kühlrohre, welche in erfindungsgemäßen Ausnehmungen des Blechpaketes angeordnet sind. Üblicherweise findet die Erfindung Anwendung bei Linearmotoren mit dreiphasigem Netzanschluss, da bei dieser Konfiguration Standardumrichter verwendet werden können. Es sind aber generell beliebige Phasenzahlen größer gleich zwei ausführbar. Der Einsatz größerer Phasenzahlen (z.B. fünf oder sechs) kann sich als vorteilhaft erweisen, wenn extreme Anforderungen an Kraftwelligkeit und Rastkraft sowie an eine verminderte Geräuschemission gestellt werden.

**Bezugszeichenliste**

| | |
|---|---|
| 1 | Grundplatte |
| 2 | Hauptzahn |
| 3 | Zwischenzahn |
| 4 | Nut |
| 5 | Kühlrohraussparung |
| 6 | Nutsteinaussparung |
| 7 | Mittelachsen |
| 8 | Blechpaket |
| 9 | Kante/Profil |
| 10 | Führungsnuten |

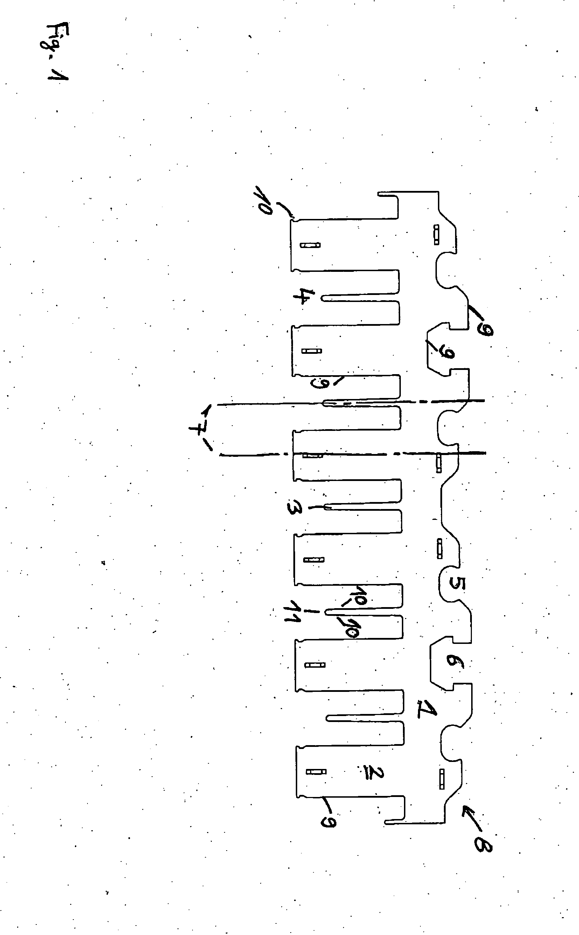

Figur 1 zeigt den Längsquerschnitt durch das aus laminierten Motorblechen hergestellte Blechpaket eines Linearmotors.

Das Blechpaket 8 umfasst eine Grundplatte 1 und auf der Grundplatte 1 gleich verteilt angeordnete Hauptzähne 2 zur Aufnahme von Wickelkörpern, wobei an der Grundplatte 1 mittig zwischen den Hauptzähnen 2 ebenfalls senkrecht zur Grundplatte 1 Hilfszähne 3 angeordnet sind, welche eine geringere Breite als die Hauptzähne 2 aufweisen. Die Höhe der Hilfszähne 3 ist so gewählt, dass im Blechpaket 8 vorhandene Streuflüsse möglichst optimal erfasst und kanalisiert werden. Die Kontur der Hilfszähne 3 und/oder der Hauptzähne 2 ist im Querschnitt des Blechpaketes betrachtet konisch ausgebildet. Optional ist das Verhältnis zwischen der Breite der Hauptzähne 2 bzw. der Breite der von den Zwischenräumen 4 zwischen den Hauptzähnen 2 gebildeten Nuten 4 und der Länge bzw. Breite der Hilfszähne 3 so gewählt, dass Streupfade optimiert werden und somit eine möglichst geringe Kraftwelligkeit und ein möglichst geringes Rastmoment im Blechpaket wirkt. Das Blechpaket umfasst Aussparungen 5 zur Realisierung von Kühlkanälen (Kühlrohre nicht gezeigt). Ebenso sind Aussparungen 6 zur Realisierung von Haltenuten vorhanden, um ein Halteelement aufzunehmen (Halteelement nicht gezeigt). Ebenfalls sind an den Wandungen der dem Sekundärteil zugewandten Stirnseiten der Hauptzähne 2 und/oder der Hilfszähne 3 Führungsnuten 10 vorhanden, welche sich in Längsrichtung des Blechpaketes erstrecken und zur Anordnung von Zusatzteilen, wie beispielsweise Deckschiebem (nicht gezeigt) dienen. Mittels der Deckschieber kann der Anpressdruck zwischen Wicklungspaketen und Bleckpaket weiter verstärkt werden. Ein Abrutschen der Wicklungen von den Hauptzähnen 2 wird dadurch ebenfalls vermieden. Aufgrund des erhöhten Anpressdruckes kann ebenfalls von einem noch weiter verbesserten Wärmeübergang ausgegangen werden.

An jedem Hauptzahn 2 wird ein Wickelkörper (nicht gezeigt) angeordnet, wobei die vom Hauptzahn 2 abgewandte Oberfläche des Wickelkörpers zumindest teilweise an der von den Hilfszähnen 3 gebildeten, längsseitigen Hilfszahnoberfläche anliegt und somit Wärme von der Wickelkörperoberfläche in das Blechpakt abgeleitet werden kann.

In Verbindung mit einem permanentmagneterregten Sekundärteil kann mittels der Erfindung ein leistungsstarker Linearmotor mit geringer Kraftwelligkeit zur Verwendung in Präzisionsmaschinen hergestellt werden.

Ein Blechstanzwerkzeug zum Herstellen eines erfindungsgemäßen Motorbleches 1 umfasst eine Schneidkante, welche korrespondierend zur Kante 9 beziehungsweise zum Profil 9 eines erfindungsgemäßen Motorbleches 1 ausgebildet ist.

## Patentansprüche

1. Motorblech zur Herstellung eines Blechpaketes für ein Linearmotorprimärteil wobei das Motorblech ein Halteelement (1) und am Halteelement (1) gleich verteilt angeordnete
Hauptvorsprünge (2) aufweist, wobei am Halteelement (1) mittig zwischen den Hauptvorsprüngen (2) ein Hilfsvorsprung (3) angeordnet ist, dessen Symmetrielängsachse (7) parallel zur Symmetrielängsachse (7) der Hauptvorsprünge (2) verläuft,
**dadurch gekennzeichnet, dass**
der Hilfsvorsprung
eine geringere Länge als die Hauptvorsprünge (2) aufweist, wobei das Halteelement (1) Aussparungen (5) zur
Realisierung von Kühlkanälen und Aussparungen (6) zur Realisierung von Haltenuten zur Aufnahme von der Befestigung des Primärteils an einem Primärteilträger erleichternden Nutsteinen, Ausnehmungen (10) an den Hauptvorsprüngen (2) zur Realisierung von Abdeckmitteln aufnehmenden Führungsnuten im Blechpaket umfasst, wobei
das Motorblech weiterhin Ausnehmungen (10) für Führungsnuten in den Hilfsvorsprüngen (3) des Blechpakets zur Montage von Zusatzteilen aufweist.

2. Motorblech nach Anspruch 1, wobei die Höhe der Hilfsvorsprünge (3) so gewählt ist, dass im Blechpaket vorhandene Streuflüsse erfasst werden.

3. Motorblech nach Anspruch 1 oder 2, wobei die Hilfsvorsprünge (3) und/oder die Hauptvorsprünge (2) konisch ausgebildet sind.

4. Motorblech nach einem der vorhergehenden Ansprüche, wobei das Verhältnis zwischen der Breite und/oder Länge der Hauptvorsprünge (2) und der Breite und/oder Länge des Zwischenraumes (4) zwischen den Hauptvorsprüngen (2) eine möglichst geringe Kraftwelligkeit und Rastkraft durch eine Reduzierung bzw. Optimierung der Streupfade im Blechpaket bewirken.

5. Motorblech nach einem der vorhergehenden Ansprüche, wobei dieses einteilig ausgebildet ist.

6. Blechpaket zur Herstellung eines Linearmotorprimärteiles, umfassend Motorbleche (8) nach einem der vorhergehenden Ansprüche, wobei die Bleche (8) miteinander verbunden sind, so dass die Hauptvorsprünge (2) Hauptzähne zur Aufnahme von Wicklungen bilden und die mittig zwischen den Hauptvorsprüngen (2) angeordneten Hilfsvorsprünge (3) Hilfszähne bilden.

7. Blechpaket nach Anspruch 6 wobei die Verbindung der Bleche (8) untereinander mechanisch oder stoffschlüssig erfolgt.

8. Primärteil eines Linearmotors mit einem Grundkörper, bestehend aus einem Blechpaket nach einem der Ansprüche 6 oder 7, wobei anjedem Hauptzahn (2) ein einziger Wickelkörper angeordnet ist, wobei die Oberfläche des Wickelkörpers zumindest teilweise an der von den Hilfszähnen (3) gebildeten, längsseitigen Wandung (10) anliegt.

9. Primärteil nach Anspruch 8, wobei an den dem Sekundärteil zugewandten Stirnseiten (11) der Hilfszähne (3) Abdeckmittel angeordnet sind.

10. Primärteil nach Anspruch 8 oder 9, wobei dieses in Haltenuten (6) angeordnete Nutsteine umfasst.

11. Primärteil nach Anspruch 8 bis 10, wobei dieses in Kühlkanälen (5) angeordnete Kühlrohre umfasst.

12. Linearmotor mit einem permanentmagneterregten Sekundärteil und einem Primärteil nach einem der Ansprüche 8 bis 11 mit vorzugsweise dreiphasigem Netzanschluss.

13. Blechstanzwerkzeug mit einer Schneidkante (9), welche korrespondierend zum Profil eines Motorbleches (8) nach einem der Ansprüche 1 bis 5 ausgebildet ist.

14. Verfahren zur Herstellung eines Linearmotorprimärteiles, wobei mittels eines Blechstanzwerkzeuges gemäß Anspruch 13 Motorbleche nach einem der Ansprüche 1 bis 5 hergestellt werden, welche miteinander zu einem Blechpaket nach einem der Ansprüche 6 bis 7 verbunden werden und wobei anschließend die Hauptzähne (2) mit Wicklungen versehen werden.

15. Verfahren nach Anspruch 14, wobei in Kühlrohraussparungen (5) des Blechpaketes Kühlrohre eingebracht werden und/oder in Haltenuten (6) Nutsteine eingebracht werden.

## Claims

1. Motor lamination for producing a laminated core for a linear motor primary part, wherein the motor lamination has a securing element (1) and main projections (2) arranged distributed evenly on the securing element (1), wherein an auxiliary projection (3), whose longitudinal axis of symmetry (7) runs parallel to the longitudinal axis of symmetry (7) of the main projections (2), is arranged on the securing element (1) centrally between the main projections (2),
**characterized in that**
the auxiliary projection has a shorter length than the main projections (2), wherein the securing element (1) comprises cutouts (5) for implementing cooling ducts and cutouts (6) for implementing securing grooves for receiving groove blocks which facilitate the attachment of the primary part to a primary part carrier, and recesses (10) on the main projections (2) for implementing guide grooves, holding covering means, in the laminated core, wherein
the motor lamination also has recesses (10) for guide grooves in the auxiliary projections (3) of the laminated core for mounting additional parts.

2. Motor lamination according to Claim 1, wherein the height of the auxiliary projections (3) is selected such that leakage fluxes which are present in the laminated core are sensed.

3. Motor lamination according to Claim 1 or 2, wherein the auxiliary projections (3) and/or the main projections (2) are embodied in a conical fashion.

4. Motor lamination according to one of the preceding claims, wherein the ratio between the width and/or the length of the main projections (2) and the width and/or the length of the intermediate space (4) between the main projections (2) brings about the smallest possible degree of force ripple and latching force by reducing and/or optimizing the leakage paths in the laminated core.

5. Motor lamination according to one of the preceding claims, wherein said lamination is embodied in one piece.

6. Laminated core for producing a linear motor primary part, comprising motor laminations (8) according to one of the preceding claims, wherein the laminations (8) are connected to one another such that the main projections (2) form main teeth for receiving windings and the auxiliary projections (3) which are arranged centrally between the main projections (2) form auxiliary teeth.

7. Laminated core according to Claim 6, wherein the connection of the laminations (8) to one another is effected in a mechanical or material-joined fashion.

8. Primary part of a linear motor having a base body, composed of a laminated core according to one of Claims 6 or 7, wherein a single winding body is arranged on each main tooth (2), wherein the surface of the winding body rests at least partially on the longitudinal-side wall (10) which is formed by the auxiliary teeth (3).

9. Primary part according to Claim 8, wherein covering means are arranged on the end sides (11), facing the secondary part, of the auxiliary teeth (3).

10. Primary part according to Claim 8 or 9, wherein said part comprises groove blocks which are arranged in securing grooves (6).

11. Primary part according to Claims 8 to 10, wherein said part comprises cooling pipes which are arranged in cooling ducts (5).

12. Linear motor having a permanent-magnet-excited secondary part and a primary part according to one of Claims 8 to 11 with a preferably three-phase power system connection.

13. Lamination-punching machine tool having a cutting edge (9) which is embodied so as to correspond to the profile of a motor lamination (8) according to one of Claims 1 to 5.

14. Method for producing a linear motor primary part, wherein by means of a lamination-punching machine tool according to Claim 13 motor laminations according to one of Claims 1 to 5 are produced, which motor laminations are connected to one another to form a laminated core according to one of Claims 6 to 7, and wherein the main teeth (2) are then provided with windings.

15. Method according to Claim 14, wherein cooling pipes are introduced into cooling pipe recesses (5) in the laminated core and/or groove blocks are introduced into securing grooves (6).

## Revendications

1. Tôle à moteur destinée à produire un empilage de tôles pour une partie primaire de moteur linéaire, la tôle de moteur possédant un élément de maintien (1) et des parties saillantes principales (2) distribuées de manière égale au niveau de l'élément de maintien (1), une partie saillante auxiliaire (3) étant disposée au niveau de l'élément de maintien (1) entre les parties saillantes principales (2), dont l'axe longitudinal de symétrie (7) suit un tracé parallèle à l'axe longitudinal de symétrie (7) des parties saillantes principales (2),
**caractérisée en ce que**
la partie saillante auxiliaire présente une longueur plus faible que les parties saillantes principales (2), l'élément de maintien (1) comportant des cavités (5) destinées à réaliser des canaux de refroidissement et des cavités (6) destinées à réaliser des rainures de maintien destinées à accueillir des lardons facilitant la fixation de la partie primaire à un élément porteur de partie primaire, des évidements (10) au niveau des parties saillantes principales (2) destinés à réaliser dans l'empilage de tôles des rainures de guidage accueillant des moyens de recouvrement, la tôle à moteur possédant en outre des évidements (10) pour des rainures de guidage dans les parties saillantes auxiliaires (3) de l'empilage de tôles destinées au montage de parties supplémentaires.

2. Tôle à moteur selon la revendication 1, la hauteur des parties saillantes auxiliaires (3) étant choisie de telle sorte que les flux de dispersion présents dans l'empilage de tôles sont collectés.

3. Tôle à moteur selon la revendication 1 ou 2, les parties saillantes auxiliaires (3) et/ou les parties saillantes principales (2) étant de configuration conique.

4. Tôle à moteur selon l'une des revendications précédentes, le rapport entre la largeur et/ou la longueur des parties saillantes principales (2) et la largeur et/ou la longueur de l'espace intermédiaire (4) entre les parties saillantes principales (2) produisant une ondulation de force et une force d'encliquetage aussi faibles que possible par une réduction ou une optimisation des chemins de dispersion dans l'empilage de tôles.

5. Tôle à moteur selon l'une des revendications précédentes, celle-ci étant réalisée d'une seule pièce.

6. Empilage de tôles destiné à la fabrication d'une partie primaire de moteur linéaire, comprenant des tôles à moteur (8) selon l'une des revendications précédentes, les tôles (8) étant assemblées les unes aux autres de sorte que les parties saillantes principales (2) forment des dents principales destinées à accueillir des enroulements et les parties saillantes auxiliaires (3) disposées au centre entre les parties saillantes principales (2) forment des dents auxiliaires.

7. Empilage de tôles selon la revendication 6, l'assemblage des tôles (8) entre elles s'effectuant mécaniquement ou par fusion de matières.

8. Partie primaire d'un moteur linéaire comprenant un corps de base, composé d'un empilage de tôles selon l'une des revendications 6 ou 7, un corps d'enroulement unique étant disposé au niveau de chaque dent principale (2), la surface du corps d'enroulement reposant au moins partiellement contre la paroi (10) du côté longitudinal formée par les dents auxiliaires (3).

9. Partie primaire selon la revendication 8, des moyens de recouvrement étant disposés au niveau des côtés frontaux (11) des dents auxiliaires (3) qui font face à la partie secondaire.

10. Partie primaire selon la revendication 8 ou 9, celle-ci comprenant des lardons disposés dans des rainures de maintien (6).

11. Partie primaire selon l'une des revendications 8 à 10, celle-ci comprenant des tubes de refroidissement disposés dans des canaux de refroidissement (5).

12. Moteur linéaire comprenant une partie secondaire excitée par aimant permanent et une partie primaire selon l'une des revendications 8 à 11 comprenant un branchement au réseau de préférence triphasé.

13. Outil de découpage de tôle comprenant une arête de coupe (9) qui est configurée en correspondance au profil d'une tôle à moteur (8) selon l'une des revendications 1 à 5.

14. Procédé de fabrication d'une partie primaire de moteur linéaire, des tôles à moteur selon l'une des revendications 1 à 5 étant produites au moyen d'un outil de découpage de tôle selon la revendication 13, lesquelles sont assemblées entre elles en un empilage de tôles selon l'une des revendications 6 à 7 et les dents principales (2) étant ensuite munies d'enroulements.

15. Procédé selon la revendication 14, des tubes de refroidissement étant introduits dans des évidements pour tube de refroidissement (5) de l'empilage de tôles et/ou des lardons étant introduits dans des rainures de maintien (6).
